# FASCICULE DE BREVET EUROPEEN

(11) **EP 4 417 953 B1**
(45) Date de publication et mention de la délivrance du brevet: **02.04.2025**
(21) Numéro de dépôt: 24156185.1
(22) Date de dépôt: 07.02.2024
(51) Int. Cl.: G01L 15/00, G01M 9/06, G01M 15/14, F01D 17/08, G01L 19/00, G01L 19/08, G01D 9/00, G07C 5/08, F02K 1/68, F02K 1/72, F02K 1/76

(54) **DISPOSITIF ÉLECTRONIQUE POUR RÂTEAU DE MESURE FACILITANT LE CHARGEMENT DE DONNÉES**
ELEKTRONISCHE VORRICHTUNG FÜR MESSRECHEN ZUR ERLEICHTERUNG DER DATENLADUNG
ELECTRONIC DEVICE FOR MEASURING RAKE FACILITATING DATA LOADING

(30) Priorité: 17.02.2023 FR 2301498
(43) Date de publication de la demande: 21.08.2024
(73) Titulaire: Airbus (S.A.S.), 31700 Blagnac (FR); AIRBUS OPERATIONS (S.A.S.), 31060 Toulouse (FR)
(72) Inventeur: DAJEAN, Cyrille, 31060 TOULOUSE (FR); DUPE, Nicolas, 31060 TOULOUSE (FR); JEAN, Nicolas, 31060 TOULOUSE (FR); MELONI, Christian, 31700 BLAGNAC (FR); KELLER, Maxime, 31060 TOULOUSE (FR)
(74) Mandataire: Airbus-OPS SAS

(56) Documents cités:
- DE-A1- 3 438 172
- DE-U1- 202010 012 601
- FR-A1- 3 117 213
- US-A1- 2019 323 909

## Description

### Domaine technique

La présente invention concerne un dispositif électronique pour râteau de mesure facilitant le chargement de données.

### État de la technique

Lors de certaines phases de conception ou de maintenance d'un aéronef, les moteurs dudit aéronef, notamment des turboréacteurs, doivent être testés. Ces tests nécessitent des prises de mesures, au sol et/ou en vol, en différents endroits du moteur que l'on souhaite tester. Ces prises de mesures impliquent une instrumentation du moteur, en particulier au niveau de l'intérieur de la veine secondaire. Pour cela, on connaît des outils de mesure prévus pour être installés dans un moteur à tester, notamment pour mesurer des pressions, tel que décrit dans le document FR 3 090 102.

Le document FR3117213 décrit un peigne de mesure pour moteur d'aéronef comportant un dispositif électronique avec une carte d'acquisition et une unité de traitement qui y est électroniquement connectée. Le document US2019/0323909 décrit un système similaire.

Ces outils de mesures nécessitent des câbles pour transmettre des données représentatives de la pression mesurée à un ou des dispositifs utilisateurs. Les câbles sont généralement fixés sur les parois du moteur ou de la nacelle à l'aide de rubans adhésifs. Or, les tests sont réalisés dans des conditions extrêmes qui peuvent entraîner un endommagement des rubans adhésifs. Par exemple, lesdits rubans adhésifs peuvent se décoller. De plus, très souvent, les câbles peuvent être sectionnés après le décollement de ces rubans adhésifs.

Les outils de mesure actuels ne sont donc pas pleinement satisfaisants.

### Exposé de l'invention

La présente invention a pour objet de remédier aux inconvénients des outils de mesure de l'art antérieur. Pour cela, elle concerne un dispositif électronique pour râteau de mesure, le râteau de mesure comportant un fourreau prévu pour être fixé à une bielle disposée en travers d'une veine d'un moteur d'aéronef.

Selon l'invention, le dispositif électronique comporte :
- une carte d'acquisition comprenant au moins un capteur de pression, la carte d'acquisition étant configurée pour s'étendre au moins en partie sur une longueur du fourreau, le ou les capteurs de pression étant aptes à générer des données représentatives de mesures de pression,
- une unité de traitement connectée électriquement de manière amovible à la carte d'acquisition, l'unité de traitement étant configurée pour être fixée de manière amovible au fourreau,
- une unité de chargement configuré pour être connectée électriquement à l'unité de traitement quand l'unité de traitement est déconnectée électriquement de la carte d'acquisition ;

l'unité de traitement comportant :
   - un premier module de communication configuré pour recevoir les données générées par le ou les capteurs de pression quand l'unité de traitement est connectée électriquement à la carte d'acquisition,
   - un module de mémorisation configuré pour stocker les données reçues par le premier module de communication,
   - un deuxième module de communication configuré pour transmettre les données stockées dans le module de mémorisation à l'unité de chargement quand l'unité de chargement est connectée électriquement à l'unité de traitement ;
l'unité de chargement comportant :
   - un troisième module de communication configuré pour recevoir les données transmises par le deuxième module de communication quand l'unité de chargement est connectée électriquement à l'unité de traitement,
   - un quatrième module de communication configuré pour transmettre les données reçues par le troisième module de communication à un dispositif utilisateur.

Ainsi, grâce au fait que l'unité de traitement est connectée électriquement de manière amovible à la carte d'acquisition et est fixée de manière amovible à une extrémité du fourreau, il est possible de détacher l'unité de traitement du fourreau. Il est alors possible de charger les données stockées dans le module de mémorisation sans avoir à démonter le fourreau qui comporte la carte d'acquisition.

Il n'est alors plus nécessaire d'utiliser des câbles fixés par du ruban adhésif pour charger les données.

Selon un mode réalisation avantageux, l'unité de traitement comprend un cinquième module de communication configuré pour communiquer à distance avec un dispositif de commande à distance, le cinquième module de communication étant configuré pour recevoir au moins un signal de commande susceptible d'être envoyé par le dispositif de commande à distance, le ou les signaux de commande étant représentatifs d'au moins une commande au ou aux capteurs de pression de démarrer l'acquisition d'au moins une mesure de pression et/ou d'au moins une commande au ou aux capteurs de pression d'arrêter l'acquisition de la ou des mesures de pression.

De plus, l'unité de traitement comprend en outre un module de synchronisation configuré pour synchroniser les données générées par le ou les capteurs de pression avant que lesdites données ne soient stockées dans le module de mémorisation.

Par ailleurs, l'unité de traitement comprend au moins un module d'alimentation configuré pour alimenter l'unité de traitement.

Selon un mode de réalisation préféré, l'unité de traitement comprend deux parties assemblées et fixées entre elles de façon amovible à une extrémité du fourreau de part et d'autre du fourreau, chacune des deux parties comprenant une carte électronique,
la carte électronique de chacune des deux parties recevant les modules de l'unité de traitement.

En outre, le premier module de communication, le module de mémorisation, le deuxième module de communication, le cinquième module de communication et le module de synchronisation sont répartis entre les deux cartes électroniques.

De plus, le module d'alimentation comprend deux batteries, chacune des deux batteries étant connectée à une carte électronique respective, chacune des deux batteries étant configurée pour alimenter le ou les modules d'une carte électronique respective.

De plus, l'unité de traitement comprend un module de gestion de batterie configuré pour surveiller le niveau de charge électrique de chacune des batteries et pour gérer l'alimentation du ou des modules des cartes électroniques en fonction du niveau de charge électrique de chacune des batteries.

Par ailleurs, chacune des deux parties de l'unité de traitement comprend une demi-coque, chaque demi-coque logeant respectivement une carte électronique, chacune des deux demi-coques étant configurée pour être assemblée à l'autre pour former une coque.

Avantageusement, l'unité de chargement est configurée pour recharger électriquement le module d'alimentation quand l'unité de chargement est connectée électriquement à l'unité de traitement.

L'invention concerne également un râteau de mesure prévu pour être fixé à une bielle disposée en travers d'une veine d'un moteur d'aéronef,
Selon l'invention, le râteau de mesure comprend un dispositif électronique tel que spécifié ci-dessus.

L'invention concerne un moteur d'un aéronef, ledit moteur comportant une veine et au moins une porte d'inversion mobile, ladite porte d'inversion comprenant au moins une bielle fixée articulée entre la porte d'inversion et une motorisation, ladite bielle étant configurée pour permettre d'amener la porte d'inversion dans une position escamotée dans laquelle elle n'est pas en travers de la veine et dans une position déployée dans laquelle est en travers de la veine,
Selon l'invention, le moteur comporte au moins un râteau de mesure tel que spécifié ci-dessus, agencé sur au moins une bielle du moteur, la ou les bielles étant chacune logée dans le logement d'au moins un fourreau d'un râteau de mesure.

L'invention concerne également un aéronef comportant au moins un moteur tel que spécifié ci-dessus.

### Brève description des figures

Les figures annexées feront bien comprendre comment l'invention peut être réalisée. Sur ces figures, des références identiques désignent des éléments semblables.
La figure 1 représente schématiquement le dispositif électronique dans lequel l'unité de traitement est connectée à la carte d'acquisition.
La figure 2 représente schématiquement le dispositif électronique dans lequel l'unité de traitement est connectée à l'unité de chargement.
La figure 3 représente un aéronef comportant un moteur présentant un râteau de mesure ayant le dispositif électronique.
La figure 4 représente schématiquement un turbo réacteur double flux comportant une porte d'inversion dans une position escamotée.
La figure 5 représente schématiquement un turbo réacteur double flux comportant une porte d'inversion dans une position déployée.
La figure 6 représente un râteau de mesure montée sur une bielle.
La figure 7 représente en perspective l'unité de traitement connectée à la carte d'acquisition.
La figure 8 représente une première vue en perspective et en éclaté de l'unité de traitement fixée à une extrémité du fourreau du râteau de mesure.
La figure 9 représente une deuxième vue en perspective et en éclaté de l'unité de traitement fixée à une extrémité du fourreau du râteau de mesure.
La figure 10 représente une coupe longitudinale du dispositif électronique.
La figure 11 représente une vue en perspective d'une première demi-coque de l'unité de traitement.
La figure 12 représente une vue en perspective d'une seconde demi-coque de l'unité de traitement.
La figure 13 représente une coupe transversale du râteau de mesure.

### Description détaillée

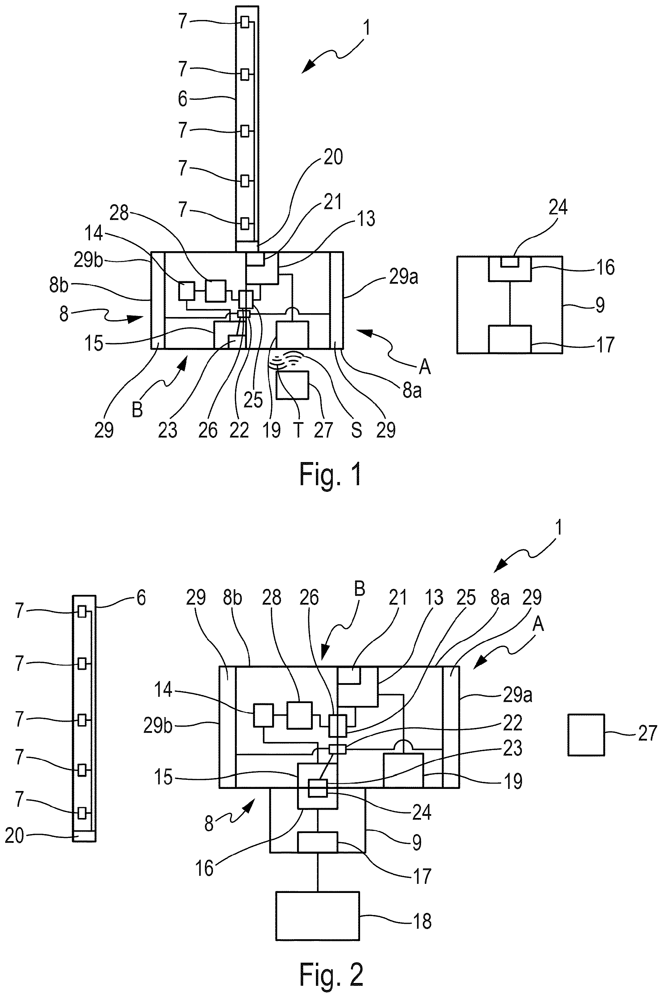

Le dispositif électronique 1 pour râteau de mesure (appelé « dispositif électronique 1 » ci-après) est représenté schématiquement sur la figure 1 et la figure 2.

Le râteau de mesure 2 (de pression) comprend un fourreau 82 prévu pour être fixé de façon amovible à une bielle 4 disposée en travers d'une veine 5 (usuellement appelée « veine secondaire ») d'un moteur 3 d'aéronef AC. Le râteau de mesure 2 permet de mesurer la pression à l'intérieur du moteur 3, en particulier à l'intérieur de la veine 5 d'un turboréacteur double flux 3.

On entend par élément « amovible », un élément qui est fixé à un assemblage de sorte qu'il puisse être démonté de l'assemblage et remonté par la suite, et ce, à volonté.

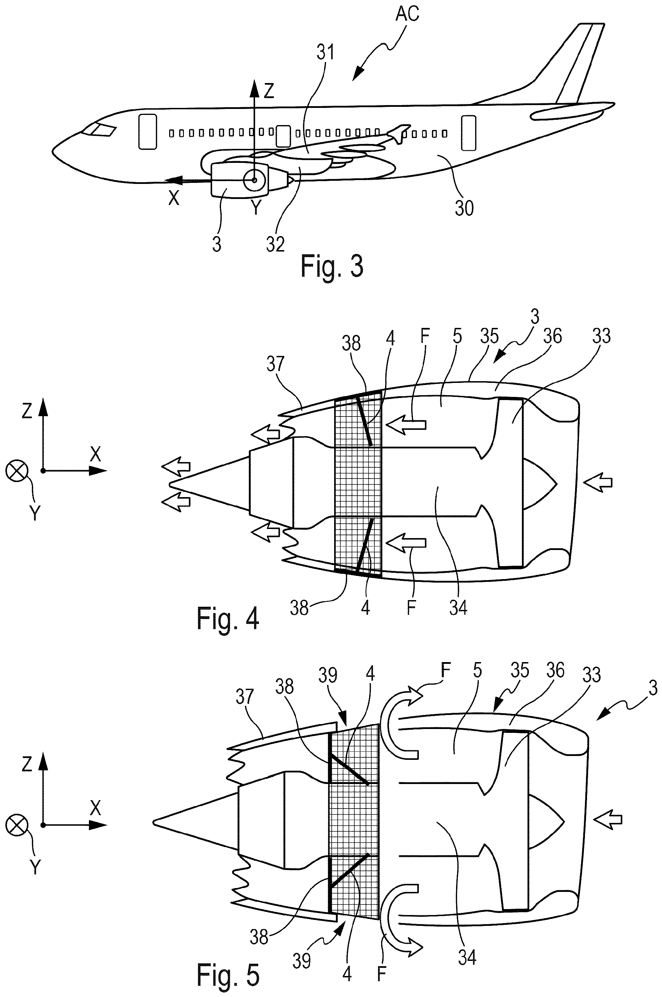

La figure 3 montre un aéronef AC qui comporte un fuselage 30 de chaque côté duquel est fixée une aile 31. L'aile 31 porte un moteur 3 et un mât 32 qui assure la fixation du moteur 3 sous l'aile 31. Dans la description qui suit, le moteur 3 correspond plus particulièrement à un turboréacteur double flux 3 comportant une veine 5, mais il peut correspondre à tout moteur comportant une veine dans laquelle la pression d'un flux d'air doit être mesurée.

Dans la description qui suit, on appelle X l'axe longitudinal du moteur 3 qui est parallèle à l'axe longitudinal de l'aéronef AC et orienté positivement vers l'avant de l'aéronef AC. On appelle Y l'axe transversal qui est horizontal quand l'aéronef AC est au sol. On appelle Z l'axe vertical lorsque l'aéronef AC est au sol. Les trois axes X, Y et Z sont orthogonaux entre eux.

La figure 4 et la figure 5 montrent un exemple d'un turboréacteur double flux 3. Le turbo réacteur double flux 3 comprend une soufflante 33, une motorisation 34 formant un noyau et une nacelle 35 disposée autour de la motorisation 34. La motorisation 34 est placée en aval de la soufflante 33. Une veine 5 est délimitée entre la motorisation 34 et la nacelle 35. L'air qui pénètre par la soufflante 33 est divisé en un flux primaire qui traverse la motorisation 34 et un flux secondaire qui traverse la veine 5. La nacelle 35 comporte autour de la soufflante 33, un carter de soufflante 36 qui est fixe et des capots mobiles 37 qui sont à l'arrière du carter de soufflante 36 et où chacun est mobile en translation selon une direction de translation globalement parallèle à l'axe longitudinal X du turboréacteur double flux 3.

Chaque capot mobile 37 est mobile en translation par rapport à la motorisation 34 entre une position avancée (figure 4) et une position reculée (figure 5). En position avancée (figure 4), les capots mobiles 37 sont accolés à l'arrière du carter de soufflante 36. En position reculée, les capots mobiles 37 sont reculés par rapport au carter de soufflante 36 et à distance du carter de soufflante 36 pour ouvrir une fenêtre 39 entre la veine 5 et l'extérieur de la nacelle 35. La fenêtre 39 est délimitée à l'avant par le carter de soufflante 36 et à l'arrière par les capots mobiles 37.

Le déplacement de chaque capot mobile 37 est assuré par tous moyens appropriés comme des glissières, des vérins, etc.

Le turboréacteur double flux 3 comporte également un système d'inversion de poussée qui comporte au moins une porte d'inversion 38.

Chaque porte d'inversion 38 est mobile entre une position escamotée (figure 4) et une position déployée (figure 5). En position escamotée (figure 4), la porte d'inversion 38 n'est pas en travers de la veine 5 et ne fait donc pas obstacle au passage du flux secondaire d'air F dans la veine 5. En position déployée (figure 5), la porte d'inversion 38 est en travers de la veine 5 de manière à dévier le flux d'air F vers la fenêtre 39 qui s'ouvre entre la veine 5 et l'extérieur de la nacelle 35.

Pour chaque porte d'inversion 38, le système d'inversion comporte également une bielle 4 qui déplace la porte d'inversion 38 de la position escamotée à la position déployée lorsque le capot mobile 37 passe de la position avancée à la position reculée. La bielle 4 est fixée articulée entre la porte d'inversion 38 et la motorisation 34.

En position escamotée (figure 4), chaque bielle 4 est en travers de la veine 5. En position déployée (figure 5), chaque bielle 4 peut se trouver pratiquement plaquée contre la motorisation 34.

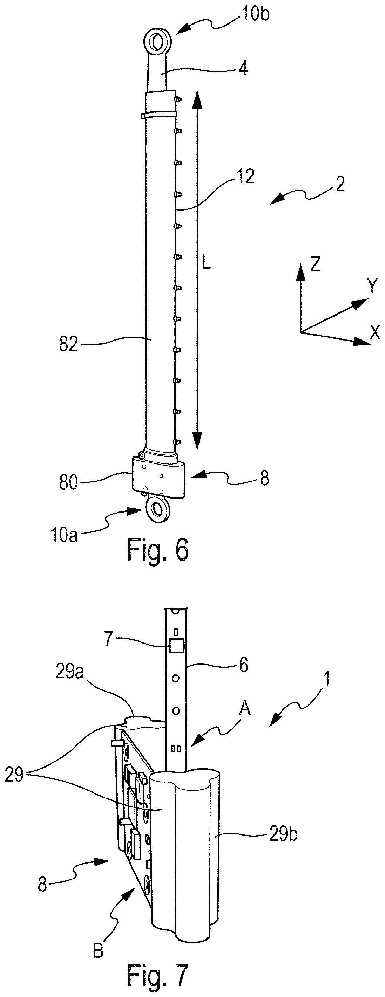

La figure 6 montre la bielle 4 avec un point d'articulation à chaque extrémité 10a, 10b et recouvert d'un râteau de mesure 2. Le râteau de mesure 2 est plus particulièrement conçu pour mesurer les pressions lorsque la porte d'inversion 38 est en position escamotée (figure 4).

La bielle 4 présente une section aérodynamique autour de laquelle s'écoule l'air de la veine 5 selon l'axe X.

Le râteau de mesure 2 comporte un fourreau 82. Le fourreau peut comporter deux parois latérales 821 et 822 entre lesquelles est délimité un logement 823 dans lequel la bielle 4 est reçue. Le logement 823 communique avec l'extérieur du fourreau 82 par une ouverture 824 qui s'étend sur une longueur L du fourreau 82 entre les deux parois latérales 821, 822. La bielle 4 est configurée pour être insérée dans le logement 823 par l'ouverture 824.

Le dispositif électronique 1 comporte une carte d'acquisition 6, une unité de traitement 8 et une unité de chargement 9 (figure 1 et figure 2).

La carte d'acquisition 6 comprend au moins un capteur de pression 7. La carte d'acquisition 6 est, par exemple, montée au bord d'attaque du fourreau 82. La carte d'acquisition 6 est configurée pour s'étendre au moins en partie sur la longueur L du fourreau 82. La longueur L du fourreau 82 (le long de laquelle la carte d'acquisition 6 est configurée pour s'étendre) est configurée pour être sensiblement parallèle à la bielle 4 sur laquelle le râteau de mesure 2 est susceptible d'être monté. Le ou les capteurs de pression 7 sont configurés pour être dirigés vers l'avant de l'aéronef AC selon l'axe X. Le ou les capteurs de pression 7 sont ainsi aptes à générer des données représentatives de mesures de pression.

Le ou les capteurs de pression 7 peuvent correspondre à un capteur de type microsystème électromécanique MEMS (« Micro-electromechanical system » en anglais).

À titre d'exemple non limitatif, le râteau de mesure 2 comprend un bord d'attaque 12 s'étendant sur toute la longueur L du fourreau 82 (figure 6).

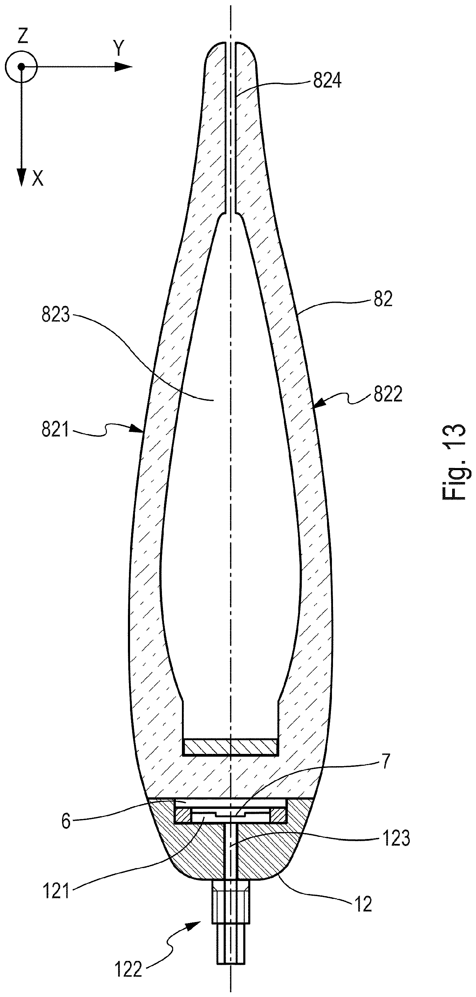

Le bord d'attaque 12 peut correspondre à une pièce rapportée sur le fourreau 82. Le bord d'attaque 12 peut aussi faire partie intégrante du fourreau 82. Le bord d'attaque 12 présente une pluralité de cavités 121 réparties sur une longueur L du bord d'attaque 12 (figure 13). Chacune des cavités 121 est isolée hermétiquement d'une autre cavité 121. Pour chacune des cavités 121, le râteau de mesure 2 comporte une prise d'air 122 qui forme un passage fluidique 123 entre la cavité 121 et la veine 5. Chaque prise d'air 122 du bord d'attaque 12 communique de façon exclusive avec une cavité 121. Dans chacune des cavités 121, le râteau de mesure 2 comprend au moins un capteur de pression 7.

L'unité de traitement 8 est connectée électriquement de manière amovible à la carte d'acquisition 6. L'unité de traitement 8 est configurée pour être fixée de manière amovible au fourreau 82 lors des mesures de pression, comme représenté sur la figure 1. De préférence, l'unité de traitement 8 est fixée à une extrémité du fourreau 82. L'extrémité peut correspondre à celle qui est la plus proche de l'extrémité 10a de la bielle qui est articulée avec le moteur 3.

L'unité de chargement 9 est configurée pour être connectée électriquement à l'unité de traitement 8 quand l'unité de traitement 8 est électriquement déconnectée de la carte d'acquisition 6 et pour charger les données générées par le ou les capteurs de pression 7, comme représenté sur la figure 2.

L'unité de traitement 8 comporte au moins un premier module de communication 13, un module de mémorisation 14 et un deuxième module de communication 15. Le premier module de communication 13 est configuré pour recevoir les données générées par le ou les capteurs de pression 7 quand l'unité de traitement 8 est connectée électriquement à la carte d'acquisition 6.

Le premier module de communication 13 et la carte d'acquisition peuvent comprendre chacun un connecteur 20 et 21, respectivement, configurés pour se connecter électriquement entre eux de façon amovible afin que l'unité de traitement puisse être connectée électriquement de façon amovible à la carte d'acquisition 6. Le module de mémorisation 14 est configuré pour stocker les données reçues par le premier module de communication 13.

Le deuxième module de communication 15 est configuré pour transmettre les données stockées dans le module de mémorisation 14 à l'unité de chargement 9 quand l'unité de chargement 9 est connectée électriquement à l'unité de traitement 8.

L'unité de chargement 9 comporte un troisième module de communication 16 et un quatrième module de communication 17.

Le troisième module de communication 16 est configuré pour recevoir les données transmises par le deuxième module de communication 15 quand l'unité de chargement 9 est connectée électriquement à l'unité de traitement 8.

Le quatrième module de communication 17 est configuré pour transmettre les données reçues par le troisième module de communication 16 à un dispositif utilisateur 18.

À titre d'exemple non limitatif, le dispositif utilisateur 18 peut correspondre à un dispositif d'affichage.

Le deuxième module de communication 15 et le troisième module de communication 16 peuvent comprendre chacun un connecteur 23 et 24, respectivement, configurés pour se connecter électriquement entre eux de façon amovible afin que le deuxième module de communication 15 puisse être connecté électriquement au troisième module de communication 16 quand l'unité de chargement 9 est connectée électriquement à l'unité de traitement 8.

Par ailleurs, l'unité de traitement 8 peut comprendre un cinquième module de communication 19 configuré pour communiquer à distance avec un dispositif de commande à distance 27. Le cinquième module de communication 19 est configuré pour recevoir au moins un signal de commande S susceptible d'être envoyé par le dispositif de commande à distance 27. Le ou les signaux de commande S sont représentatifs d'au moins une commande au ou aux capteurs de pression 7 de démarrer l'acquisition d'au moins une mesure de pression et/ou d'au moins une commande au ou aux capteurs de pression 7 d'arrêter l'acquisition de la ou des mesures de pression. La ou les commandes peuvent être transmises au ou aux capteurs de pression 7 via le premier module de communication 13.

Le signal de commande S susceptible d'être envoyé par le dispositif de commande à distance 27 au cinquième module de communication 19 peut correspondre également à un signal de configuration de fréquence d'acquisition destiné au ou aux capteurs de pression 7. Le signal de configuration de fréquence d'acquisition peut commander le ou les capteurs 7 d'acquérir la ou les mesures de pression sur une fréquence d'acquisition donnée.

Par exemple, le cinquième module de communication 19 communique à distance avec le dispositif de commande à distance 27 par un protocole de communication à distance telle qu'un protocole de type « Bluetooth ».

Selon un mode de réalisation, le dispositif électronique 1 peut comprendre ledit dispositif de commande à distance 27.

Selon un autre mode de réalisation, le dispositif de commande à distance 27 peut correspondre à un téléphone intelligent mettant en œuvre une application.

Ainsi, il est possible de commander à distance le début et la fin des mesures de pression par le râteau de mesure 2.

Le cinquième module de communication 19 peut également envoyer au dispositif de commande à distance 27 un signal T représentatif de mesures de pression mesurées par le ou les capteurs de pression 7. Le dispositif de commande à distance 27 peut être aussi configuré pour vérifier les mesures de pression mesurées par le ou les capteurs de pression 7.

L'unité de traitement 8 peut comprendre en outre un module de synchronisation 28 configuré pour synchroniser les données générées par le ou les capteurs de pression 7 avant que lesdites données ne soient stockées dans le module de mémorisation 14. Le module de synchronisation 28 peut synchroniser entre elles les données générées par chacun des capteurs de pression 7.

Le signal de commande S susceptible d'être envoyé par le dispositif de commande à distance 27 au cinquième module de communication 19 peut correspondre également à un signal de synchronisation destiné au module de synchronisation 28. Le signal de synchronisation peut synchroniser le module de synchronisation 28 sur une référence temporelle externe ou sur une heure interne du dispositif de commande à distance 27.

L'unité de traitement 8 peut comprendre au moins un module d'alimentation 29 configuré pour alimenter l'unité de traitement 8.

Le cinquième module de communication 19 peut également envoyer au dispositif de commande à distance 27 un signal T représentatif du niveau de charge électrique du module d'alimentation 29. Le dispositif de commande à distance 27 peut être aussi configuré pour afficher le niveau de charge électrique du module d'alimentation 29.

Dans un mode de réalisation préféré, l'unité de traitement 8 comprend deux parties A et B. Les deux parties A et B sont assemblées et fixées entre elles de façon amovible à l'extrémité 10a du fourreau 82 de part et d'autre du fourreau 82. Chacune des deux parties A et B comprend une carte électronique 8a, 8b.

Dans ce mode de réalisation préféré, la carte électronique 8a, 8b de chacune des deux parties A, B reçoit les modules de l'unité de traitement 8 ; autrement dit, l'unité de traitement 8 comprend deux cartes électroniques 8a et 8b comprenant les modules 13, 14, 15, 19 et 28 de l'unité de traitement 8.

La carte électronique 8a et la carte électronique 8b peuvent comprendre en outre chacune un connecteur 25 et 26. Les connecteurs 25 et 26 sont configurés pour se connecter électriquement entre eux de façon amovible afin que les deux cartes électroniques 8a et 8b puissent être connectées entre elles de façon amovible lors de l'assemblage des deux parties A et B et qu'elles puissent être déconnectées lors du désassemblage des deux parties A et B.

De plus, dans le mode de réalisation préféré, le premier module de communication 13, le module de mémorisation 14, le deuxième module de communication 15, le cinquième module de communication 19 et le module de synchronisation 28 sont répartis entre les deux cartes électroniques 8a, 8b.

De préférence, le module de mémorisation 14 et le deuxième module de communication 15 sont compris dans la même carte électronique 8a ou 8b.

La figure 1 et la figure 2 représentent un exemple de répartition des modules 13, 14, 15, 19 et 28. Dans cet exemple, le premier module de communication 13 et le cinquième module de communication 19 sont compris dans la carte électronique 8a. Le deuxième module de communication 15, le module de mémorisation 14 et le module de synchronisation 28 sont compris dans la carte électronique 8b.

Dans le mode de réalisation préféré, le module d'alimentation 29 comprend deux batteries 29a et 29b. Chacune des deux batteries 29a et 29b est connectée à une carte électronique 8a, 8b respective. Chacune des deux batteries 29a et 29b est configurée pour alimenter le ou les modules 13, 14, 15, 19 et 28 d'une carte électronique 8a, 8b respective.

Avantageusement, l'unité de chargement 9 est configurée pour recharger électriquement le module d'alimentation 29, notamment les batteries 29a et 29b, quand l'unité de chargement 9 est connectée électriquement à l'unité de traitement 8. Chacune des batteries 29a et 29b peuvent être rechargées électriquement par l'unité de chargement 9 quand les connecteurs 23 et 24 sont connectés électriquement. L'unité de chargement 9 est donc configurée pour recharger électriquement les batteries 29a et 29b. L'unité de chargement 9 peut être alimentée sur secteur.

L'unité de traitement 8 peut comprendre un module de gestion de batterie 22. Le module de gestion de batterie 22 est configuré pour surveiller le niveau de charge électrique de chacune des batteries 29a, 29b et pour gérer l'alimentation du ou des modules des cartes électroniques 8a, 8b en fonction du niveau de charge électrique de chacune des batteries 29a, 29b. Par exemple, il peut être configuré pour basculer l'alimentation du ou des modules 13, 14, 15, 19 et 28 sur la batterie 29a ou 29b à qui il reste un niveau de charge électrique lui laissant le plus d'autonomie. En outre, il peut être configuré pour stopper une alimentation par des batteries 29a, 29b si celles-ci passent sous un seuil de capacité afin d'éviter une décharge profonde qui peut entraîner une impossibilité de rechargement des batteries 29a et 29b. Le seuil de capacité peut être configurable, par exemple par un utilisateur. Comme représenté sur la figure 1 et la figure 2, le module de gestion de batterie 22 peut être réparti sur les deux cartes électroniques 8a et 8b pour pouvoir surveiller le niveau de charge électrique de chacune des batteries 29a, 29b quand les deux cartes électroniques sont déconnectées l'une de l'autre. Toutefois, le module de gestion de batterie 22 peut être compris sur une seule carte électronique 8a, 8b.

Le cinquième module de communication 19 peut également envoyer au dispositif de commande à distance 27 un signal T représentatif du niveau de charge électrique de chacune des batteries 29a, 29b du module d'alimentation 29. Le niveau de charge de chacune des batteries 29a, 29b peut être fourni par le module de gestion de batterie 22. Le dispositif de commande à distance 27 peut être aussi configuré pour afficher, par exemple sur un écran, le niveau de charge électrique de chacune des batteries 29a, 29b.

Le cinquième module de communication 19 peut également envoyer au dispositif de commande à distance 27 un signal T représentatif du niveau le mode de fonctionnement du ou des modules 13, 14, 15, 19 et 28 des cartes électroniques 8a, 8b. Le dispositif de commande à distance 27 peut être aussi configuré pour afficher, par exemple sur un écran, le mode de fonctionnement de chacun de ces modules 13, 14, 15, 19 et 28. Un mode de fonctionnement peut correspondre à une veille de module, une attente (de commande) du module ou un mode d'acquisition de mesures de pression (pour les capteurs 7 par exemple).

La répartition de l'unité de traitement 8 en deux cartes électroniques 8a et 8b permet d'avoir la place nécessaire pour intégrer tous les modules 13, 14, 15, 19, 28 et 29 dans l'unité de traitement 8 et d'autres modules. La répartition peut aussi permettre une répartition des masses de part et d'autre de la bielle 4 quand le râteau de mesure 2 est monté sur la bielle 4.

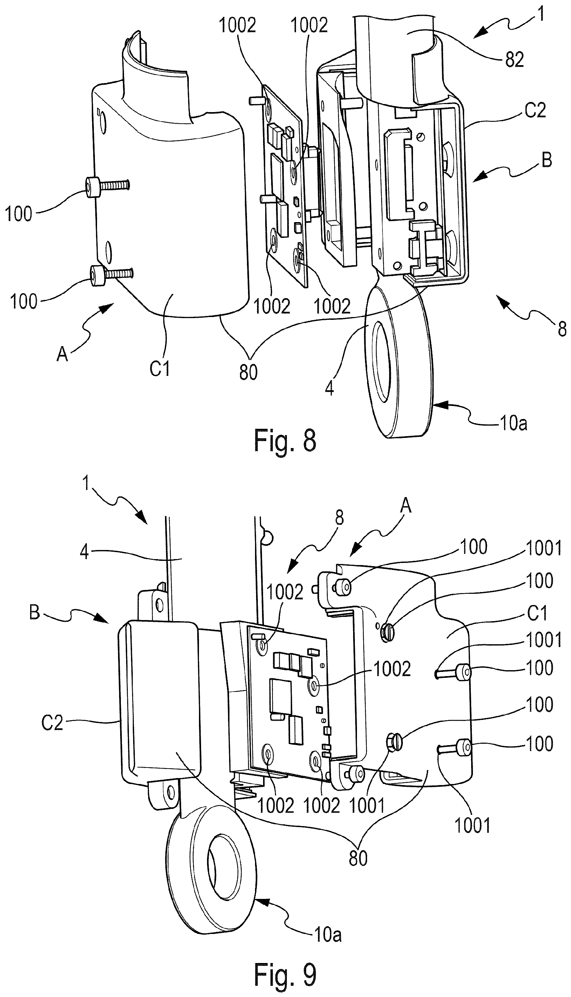

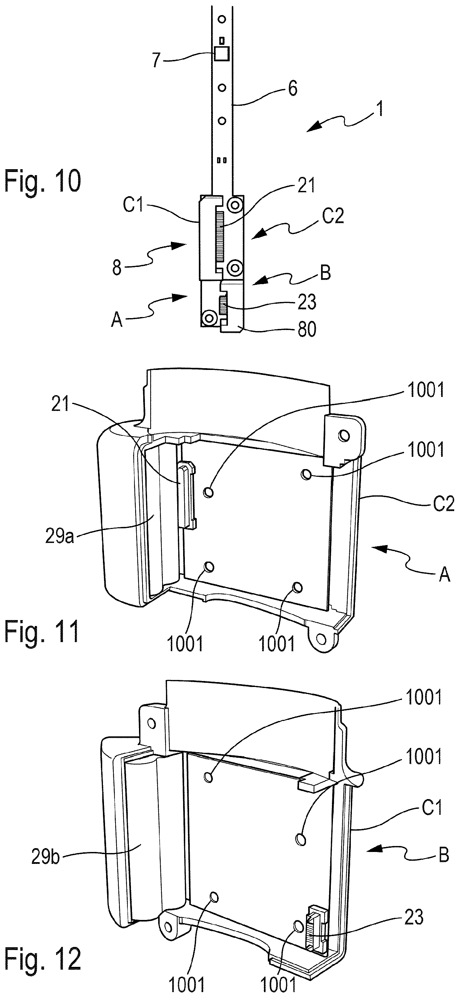

Par ailleurs, chacune des deux parties A, B de l'unité de traitement 8 peut comprendre une demi-coque C1, C2. Chaque demi-coque C1, C2 loge respectivement une carte électronique 8a, 8b. Chacune des demi-coques C1, C2 est configurée pour être assemblée à l'autre pour former une coque 80 configurée pour contenir l'unité de traitement 8. La coque 80 est donc fixée de façon amovible à une extrémité 10a du fourreau 82. La coque 80 est configurée pour être fixée de façon amovible de part et d'autre de la bielle 4, comme représenté sur la figure 8, la figure 9, la figure 11 et la figure 12. Les deux demi-coques C1, C2 peuvent être assemblées à l'aide de vis 100 (figure 8 et figure 9). Chacune des cartes électroniques 8a et 8b peuvent présenter des trous 1002 permettant aux vis 100 de joindre la demi-coque C1 et la demi-coque C2 (figure 8 et figure 9).

Selon un mode de réalisation préféré, les vis 100 peuvent correspondre à des vis captives ou autrement appelées des vis imperdables. Les vis captives sont vissées à travers des trous taraudés 1001 de la demi-coque C1. Les vis captives présente un fût non fileté entre une partie filetée et une tête de la vis captive. Comme le diamètre du fût est inférieur à celui de la partie filetée, la vis captive peut translater librement jusqu'au trou taraudé 1001 de la demi-coque C2 afin de les y visser et d'assembler les deux demi-coques C1 et C2 sur le fourreau 82. En revanche, la vis captive reste dans le trou taraudé 1001 de la demi-coque C1 sans une action de dévissage au niveau du trou taraudé 1001 de la demi-coque C1. Par ailleurs, les trous 1002 de chacune des cartes électroniques 8a et 8b présentent un diamètre supérieur au diamètre de filetage des vis 100 afin de laisser translater librement lesdites vis 100 jusqu'au trou taraudé 1001 de la demi-coque C2. Ainsi, l'utilisation de vis captives permet d'éviter qu'elles puissent s'échapper lors du montage ou du démontage des demi-coques C1 et C2 sur le fourreau 82.

Chacune des deux cartes électroniques 8a et 8b est logée dans une demi-coque C1, C2 respective. Les deux cartes électroniques 8a et 8b sont donc configurées pour être disposées de part et d'autre de la bielle 4 quand la coque 80 est fixée à l'extrémité 10a du fourreau 82.

Le râteau de mesure 2 peut être utilisé de la manière suivante.

Le fourreau 82 est fixé sur une bielle 4 du moteur 3. Le fourreau 82 est déjà équipé de la carte d'acquisition 6 du dispositif électronique 1.

L'unité de traitement 8 est ensuite connectée électriquement à la carte d'acquisition 6 et est fixée à l'extrémité 10a du fourreau 82. Dans le mode de réalisation préféré, les deux parties A et B sont assemblées à l'extrémité 10a du fourreau 82.

Lorsque des mesures de pression doivent commencer, un opérateur peut agir sur le dispositif de commande à distance 27 pour que le dispositif de commande à distance envoie un signal de commande S à distance au ou aux capteurs de pression 7 via le cinquième module de communication 19 pour commander au ou aux capteurs de pression 7 de démarrer l'acquisition d'au moins une mesure de pression.

Le ou les capteurs de pression 7 de la carte d'acquisition 6 génèrent ensuite des données représentatives de mesures de pression. Le premier module de communication 13 reçoit ces données. Ces données sont alors stockées dans le module de mémorisation 14. Les données générées par le ou les capteurs de pression 7 peuvent être synchronisées entre elles par le module de synchronisation 28 avant que lesdites données ne soient stockées dans le module de mémorisation 14.

Quand on décide que les mesures de pression sont terminées, l'opérateur peut agir sur le dispositif de commande à distance 27 afin que le dispositif de commande à distance 27 envoie un signal de commande S à distance au ou aux capteurs de pression 7 via le cinquième module de communication 19 pour commander au ou aux capteurs de pression 7 d'arrêter l'acquisition de la ou des mesures de pression. Afin de récupérer les données, l'unité de traitement 8 est déconnectée de la carte d'acquisition 6 et l'unité de traitement 8 est démontée de l'extrémité 10a du fourreau 82. Dans le mode de réalisation préféré, les deux parties A et B sont désassemblées de l'extrémité 10a du fourreau 82. L'opérateur peut alors détacher les deux parties A et B de la bielle 4 en vue de connecter l'unité de traitement 8 à l'unité de chargement 9.

L'unité de traitement 8 est alors connectée électriquement à l'unité de chargement 9 pour charger les données de mesure de pression via le deuxième module de communication 15 et le troisième module de communication 16. L'unité de chargement 9 peut ainsi transmettre les données à un dispositif utilisateur 18 via le quatrième module de communication 17.

Dans le mode de réalisation préféré, c'est au moins la partie A ou B qui comprend le module de mémorisation 14 et le deuxième module de communication 15 qui est connectée électriquement à l'unité de chargement 9.

## Revendications

1. Dispositif électronique pour râteau de mesure, le râteau de mesure (2) comportant un fourreau (82) prévu pour être fixé à une bielle (4) disposée en travers d'une veine (5) d'un moteur (3) d'aéronef (AC),
**caractérisée en ce qu'**il comporte :
- une carte d'acquisition (6) comprenant au moins un capteur de pression (7), la carte d'acquisition (6) étant configurée pour s'étendre au moins en partie sur une longueur (L) du fourreau (82), le ou les capteurs de pression (7) étant aptes à générer des données représentatives de mesures de pression,
- une unité de traitement (8) connectée électriquement de manière amovible à la carte d'acquisition (6), l'unité de traitement (8) étant configurée pour être fixée de manière amovible au fourreau (82),
- une unité de chargement (9) configuré pour être connectée électriquement à l'unité de traitement (8) quand l'unité de traitement (8) est déconnectée électriquement de la carte d'acquisition (6) ;
l'unité de traitement (8) comportant :
- un premier module de communication (13) configuré pour recevoir les données générées par le ou les capteurs de pression (7) quand l'unité de traitement (8) est connectée électriquement à la carte d'acquisition (6),
- un module de mémorisation (14) configuré pour stocker les données reçues par le premier module de communication (13),
- un deuxième module de communication (15) configuré pour transmettre les données stockées dans le module de mémorisation (14) à l'unité de chargement (9) quand l'unité de chargement (9) est connectée électriquement à l'unité de traitement (8) ;
l'unité de chargement (9) comportant :
- un troisième module de communication (16) configuré pour recevoir les données transmises par le deuxième module de communication (15) quand l'unité de chargement (9) est connectée électriquement à l'unité de traitement (8),
- un quatrième module de communication (17) configuré pour transmettre les données reçues par le troisième module de communication (16) à un dispositif utilisateur (18).

2. Dispositif selon la revendication 1,
**caractérisée en ce que** l'unité de traitement (8) comprend un cinquième module de communication (19) configuré pour communiquer à distance avec un dispositif de commande à distance (27), le cinquième module de communication (19) étant configuré pour recevoir au moins un signal de commande (S) susceptible d'être envoyé par le dispositif de commande à distance (27), le ou les signaux de commande (S) étant représentatifs d'au moins une commande au ou aux capteurs de pression (7) de démarrer l'acquisition d'au moins une mesure de pression et/ou d'au moins une commande au ou aux capteurs de pression (7) d'arrêter l'acquisition de la ou des mesures de pression.

3. Dispositif selon l'une des revendications 1 et 2,
**caractérisé en ce que** l'unité de traitement (8) comprend en outre un module de synchronisation (28) configuré pour synchroniser les données générées par le ou les capteurs de pression (7) avant que lesdites données ne soient stockées dans le module de mémorisation (14).

4. Dispositif selon l'une des revendications 1 à 3,
**caractérisée en ce que** l'unité de traitement (8) comprend au moins un module d'alimentation (29) configuré pour alimenter l'unité de traitement (8).

5. Dispositif selon l'une des revendications 1 à 4,
**caractérisée en ce que** l'unité de traitement (8) comprend deux parties (A, B) assemblées et fixées entre elles de façon amovible à une extrémité (10a) du fourreau (82) de part et d'autre du fourreau (82), chacune des deux parties (A, B) comprenant une carte électronique (8a, 8b), la carte électronique (8a, 8b) de chacune des deux parties (A, B) recevant les modules de l'unité de traitement (8).

6. Dispositif selon la revendication 5,
**caractérisé en ce que** le premier module de communication (13), le module de mémorisation (14), le deuxième module de communication (15), le cinquième module de communication (19) et le module de synchronisation (28) sont répartis entre les deux cartes électroniques (8a, 8b).

7. Dispositif selon l'une des revendication 5 et 6,
**caractérisé en ce que** le module d'alimentation (29) comprend deux batteries (29a, 29b), chacune des deux batteries (29a, 29b) étant connectée à une carte électronique (8a, 8b) respective, chacune des deux batteries (29a, 29b) étant configurée pour alimenter le ou les modules d'une carte électronique (8a, 8b) respective.

8. Dispositif selon la revendication 7,
**caractérisé en ce que** l'unité de traitement (8) comprend un module de gestion de batterie (22) configuré pour surveiller le niveau de charge électrique de chacune des batteries (29a, 29b) et pour gérer l'alimentation du ou des modules des cartes électroniques (8a, 8b) en fonction du niveau de charge électrique de chacune des batteries (29a, 29b).

9. Dispositif selon l'une des revendications 5 à 8,
**caractérisé en ce que** chacune des deux parties (A, B) de l'unité de traitement (8) comprend une demi-coque (C1, C2), chaque demi-coque (C1, C2) logeant respectivement une carte électronique (8a, 8b), chacune des deux demi-coques (C1, C2) étant configurée pour être assemblée à l'autre pour former une coque (80).

10. Dispositif selon l'une des revendications 4 à 9,
**caractérisé en ce que** l'unité de chargement (9) est configurée pour recharger électriquement le module d'alimentation (29) quand l'unité de chargement (9) est connectée électriquement à l'unité de traitement (8).

11. Râteau de mesure prévu pour être fixé à une bielle disposée en travers d'une veine d'un moteur d'aéronef,
**caractérisée en ce qu'**il comprend un dispositif électronique (1) selon l'une des revendications 1 à 10.

12. Moteur d'un aéronef, ledit moteur (3) comportant une veine (5) et au moins une porte d'inversion (38) mobile, ladite porte d'inversion (38) comprenant au moins une bielle (4) fixée articulée entre la porte d'inversion (38) et une motorisation (34), ladite bielle (4) étant configurée pour permettre d'amener la porte d'inversion (38) dans une position escamotée dans laquelle elle n'est pas en travers de la veine (5) et dans une position déployée dans laquelle est en travers de la veine (5),
**caractérisé en ce qu'**il comporte au moins un râteau de mesure (2) selon la revendication **11,** agencé sur au moins une bielle (4) du moteur (3), la ou les bielles (4) étant chacune logée dans le logement d'au moins un fourreau (82) d'un râteau de mesure (2).

13. Aéronef,
**caractérisé en ce qu'**il comporte au moins un moteur selon la revendication 12.

## Patentansprüche

1. Elektronische Vorrichtung für einen Messrechen, wobei der Messrechen (2) eine Hülse (82) umfasst, die dazu vorgesehen ist, an einer Stange (4) befestigt werden, die quer zu einem Kanal (5) eines Triebwerks (3) eines Luftfahrzeugs (AC) angeordnet ist,
**dadurch gekennzeichnet, dass** sie umfasst:
- eine Erfassungskarte (6), die mindestens einen Drucksensor (7) aufweist, wobei die Erfassungskarte (6) dazu ausgestaltet ist, sich mindestens zum Teil über eine Länge (L) der Hülse (82) zu erstrecken, wobei der oder die Drucksensoren (7) geeignet sind, für Druckmessungen repräsentative Daten zu erzeugen,
- eine Verarbeitungseinheit (8) die lösbar elektrisch mit der Erfassungskarte (6) verbunden ist, wobei die Verarbeitungseinheit (8) dazu ausgestaltet ist, lösbar an der Hülse (82) befestigt zu werden,
- eine Ladeeinheit (9), die dazu ausgestaltet ist, elektrisch mit der Verarbeitungseinheit (8) verbunden zu werden, wenn die Verarbeitungseinheit (8) von der Erfassungskarte (6) elektrisch getrennt ist;
wobei die Verarbeitungseinheit (8) umfasst:
- ein erstes Kommunikationsmodul (13), das dazu ausgestaltet ist, die von dem oder den Drucksensoren (7) erzeugten Daten zu empfangen, wenn die Verarbeitungseinheit (8) mit der Erfassungskarte (6) elektrisch verbunden ist,
- ein Speichermodul (14), das dazu ausgestaltet ist, die von dem ersten Kommunikationsmodul (13) empfangenen Daten zu speichern,
- ein zweites Kommunikationsmodul (15), das dazu ausgestaltet ist, die in dem Speichermodul (14) gespeicherten Daten an die Ladeeinheit (9) zu übertragen, wenn die Ladeeinheit (9) mit der Verarbeitungseinheit (8) elektrisch verbunden ist;
wobei die Ladeeinheit (9) umfasst:
- ein drittes Kommunikationsmodul (16), das dazu ausgestaltet ist, die von dem zweiten Kommunikationsmodul (15) übertragenen Daten zu empfangen, wenn die Ladeeinheit (9) mit der Verarbeitungseinheit (8) elektrisch verbunden ist,
- ein viertes Kommunikationsmodul (17), das dazu ausgestaltet ist, die von dem dritten Kommunikationsmodul (16) empfangenen Daten an eine Verbrauchervorrichtung (18) zu übertragen.

2. Vorrichtung nach Anspruch 1,
**dadurch gekennzeichnet, dass** die Verarbeitungseinheit (8) ein fünftes Kommunikationsmodul (19) aufweist, das dazu ausgestaltet ist, mit einer Fernsteuervorrichtung (27) fernzukommunizieren, wobei das fünfte Kommunikationsmodul (19) dazu ausgestaltet ist, mindestens ein Steuersignal (S) zu empfangen, das geeignet ist, von der Fernsteuervorrichtung (27) gesendet zu werden, wobei das oder die Steuersignale (S) für mindestens einen Befehl an den oder die Drucksensoren (7) repräsentativ ist bzw. sind, die Erfassung mindestens einer Druckmessung zu starten, und/oder für einen Befehl an den oder die Drucksensoren (7), die Erfassung der Druckmessung oder -messungen zu stoppen.

3. Vorrichtung nach einem der Ansprüche 1 und 2,
**dadurch gekennzeichnet, dass** die Verarbeitungseinheit (8) ferner ein Synchronisationsmodul (28) aufweist, das dazu ausgestaltet ist, die von dem oder den Drucksensoren (7) erzeugten Daten zu synchronisieren, bevor die Daten in dem Speichermodul (14) gespeichert werden.

4. Vorrichtung nach einem der Ansprüche 1 bis 3,
**dadurch gekennzeichnet, dass** die Verarbeitungseinheit (8) mindestens ein Versorgungsmodul (29) aufweist, das dazu ausgestaltet ist, die Verarbeitungseinheit (8) zu versorgen.

5. Vorrichtung nach einem der Ansprüche 1 bis 4,
**dadurch gekennzeichnet, dass** die Verarbeitungseinheit (8) zwei Teile (A, B) aufweist, die montiert und untereinander lösbar an einem Ende (10a) der Hülse (82) beidseits der Hülse (82) befestigt sind, wobei jeder der beiden Teile (A, B) eine Leiterplatte (8a, 8b) aufweist, wobei die Leiterplatte (8a, 8b) jedes der beiden Teile (A, B) die Module der Verarbeitungseinheit (8) aufnimmt.

6. Vorrichtung nach Anspruch 5,
**dadurch gekennzeichnet, dass** das erste Kommunikationsmodul (13), das Speichermodul (14), das zweite Kommunikationsmodul (15), das fünfte Kommunikationsmodul (19) und das Synchronisationsmodul (28) auf die beiden Leiterplatten (8a, 8b) aufgeteilt sind.

7. Vorrichtung nach einem der Ansprüche 5 und 6,
**dadurch gekennzeichnet, dass** das Versorgungsmodul (29) zwei Batterien (29a, 29b) aufweist, wobei jede der beiden Batterien (29a, 29b) mit einer jeweiligen Leiterplatte (8a, 8b) verbunden ist, wobei jede der beiden Batterien (29a, 29b) dazu ausgestaltet ist, das oder die Module einer jeweiligen Leiterplatte (8a, 8b) zu versorgen.

8. Vorrichtung nach Anspruch 7,
**dadurch gekennzeichnet, dass** die Verarbeitungseinheit (8) ein Batterieverwaltungsmodul (22) aufweist, das dazu ausgestaltet ist, den elektrischen Ladestand jeder der Batterien (29a, 29b) zu überwachen und die Versorgung des oder der Module der Leiterplatten (8a, 8b) in Abhängigkeit von dem elektrischen Ladestand jeder der Batterien (29a, 29b) zu verwalten.

9. Vorrichtung nach einem der Ansprüche 5 bis 8,
**dadurch gekennzeichnet, dass** jeder der beiden Teile (A, B) der Verarbeitungseinheit (8) eine Halbschale (C1, C2) aufweist, wobei jede Halbschale (C1, C2) jeweils eine Leiterplatte (8a, 8b) aufnimmt, wobei jede der beiden Halbschalen (C1, C2) dazu ausgestaltet ist, an die andere montiert zu werden, um eine Schale (80) zu bilden.

10. Vorrichtung nach einem der Ansprüche 4 bis 9,
**dadurch gekennzeichnet, dass** die Ladeeinheit (9) dazu ausgestaltet ist, das Versorgungsmodul (29) elektrisch wieder aufzuladen, wenn die Ladeeinheit (9) mit der Verarbeitungseinheit (8) elektrisch verbunden ist.

11. Messrechen, der dazu vorgesehen ist, an einer Stange befestigt zu werden, die quer zu einem Kanal eines Triebwerks eines Luftfahrzeugs angeordnet ist,
**dadurch gekennzeichnet, dass** er eine elektronische Vorrichtung (1) nach einem der Ansprüche 1 bis 10 aufweist.

12. Triebwerk eines Luftfahrzeugs, wobei das Triebwerk (3) einen Kanal (5) und mindestens eine bewegliche Umkehrklappe (38) umfasst, wobei die Umkehrklappe (38) mindestens eine Stange (4) aufweist, die schwenkbar zwischen der Umkehrklappe (38) und einem Antrieb (34) befestigt ist, wobei die Stange (4) dazu ausgestaltet ist, das Führen der Umkehrklappe (38) in eine eingefahrene Stellung, in der sie nicht quer zu dem Kanal (5) liegt, und in eine ausgefahrene Stellung, in der sie quer zu dem Kanal (5) liegt, zu ermöglichen,
**dadurch gekennzeichnet, dass** es mindestens einen Messrechen (2) nach Anspruch 11 umfasst, der an mindestens einer Stange (4) des Triebwerks (3) eingerichtet ist, wobei die Stange oder die Stangen (4) jeweils in der Aufnahme mindestens einer Hülse (82) eines Messrechens (2) aufgenommen sind.

13. Luftfahrzeug,
**dadurch gekennzeichnet, dass** es mindestens ein Triebwerk nach Anspruch 12 umfasst.

## Claims

1. Electronic device for a measuring rake, the measuring rake (2) comprising a sleeve (82) designed to be fixed to a connecting rod (4) disposed across a duct (5) of an engine (3) of an aircraft (AC),
**characterized in that** it comprises:
- an acquisition board (6) comprising at least one pressure sensor (7), the acquisition board (6) being configured to at least partly extend over a length (L) of the sleeve (82), the one or more pressure sensors (7) being able to generate data representing pressure measurements;
- a processing unit (8) detachably electrically connected to the acquisition board (6), the processing unit (8) being configured to be detachably fixed to the sleeve (82);
- a loading/charging unit (9) configured to be electrically connected to the processing unit (8) when the processing unit (8) is electrically disconnected from the acquisition board (6);
the processing unit (8) comprising:
- a first communication module (13) configured to receive the data generated by the one or more pressure sensors (7) when the processing unit (8) is electrically connected to the acquisition board (6);
- a storage module (14) configured to store the data received by the first communication module (13);
- a second communication module (15) configured to transmit the data stored in the storage module (14) to the loading/charging unit (9) when the loading/charging unit (9) is electrically connected to the processing unit (8) ;
the loading/charging unit (9) comprising:
- a third communication module (16) configured to receive the data transmitted by the second communication module (15) when the loading/charging unit (9) is electrically connected to the processing unit (8);
- a fourth communication module (17) configured to transmit the data received by the third communication module (16) to a user device (18).

2. Device according to Claim 1,
**characterized in that** the processing unit (8) comprises a fifth communication module (19) configured to remotely communicate with a remote control device (27), the fifth communication module (19) being configured to receive at least one control signal (S) likely to be sent by the remote control device (27), the one or more control signals (S) representing at least one command to the one or more pressure sensors (7) to start acquiring at least one pressure measurement and/or at least one command to the one or more pressure sensors (7) to stop acquiring the one or more pressure measurements.

3. Device according to either of Claims 1 and 2,
**characterized in that** the processing unit (8) further comprises a synchronization module (28) configured to synchronize the data generated by the one or more pressure sensors (7) before said data is stored in the storage module (14).

4. Device according to any of Claims 1 to 3,
**characterized in that** the processing unit (8) comprises at least one power supply module (29) configured to supply power to the processing unit (8).

5. Device according to any of Claims 1 to 4,
**characterized in that** the processing unit (8) comprises two parts (A, B) assembled and detachably fixed together at one end (10a) of the sleeve (82) on either side of the sleeve (82), each of the two parts (A, B) comprising an electronic board (8a, 8b), the electronic board (8a, 8b) of each of the two parts (A, B) accommodating the modules of the processing unit (8).

6. Device according to Claim 5,
**characterized in that** the first communication module (13), the storage module (14), the second communication module (15), the fifth communication module (19) and the synchronization module (28) are distributed between the two electronic boards (8a, 8b).

7. Device according to either of Claims 5 and 6,
**characterized in that** the power supply module (29) comprises two batteries (29a, 29b), each of the two batteries (29a, 29b) being connected to a respective electronic board (8a, 8b), each of the two batteries (29a, 29b) being configured to supply power to the one or more modules of a respective electronic board (8a, 8b).

8. Device according to Claim 7,
**characterized in that** the processing unit (8) comprises a battery management module (22) configured to monitor the electric charge level of each of the batteries (29a, 29b) and to manage the supply of power to the one or more modules of the electronic boards (8a, 8b) as a function of the electric charge level of each of the batteries (29a, 29b).

9. Device according to any of Claims 5 to 8,
**characterized in that** each of the two parts (A, B) of the processing unit (8) comprises a half-shell (C1, C2), each half-shell (C1, C2) respectively housing an electronic board (8a, 8b), each of the two half-shells (C1, C2) being configured to be assembled to the other half-shell in order to form a shell (80).

10. Device according to any of Claims 4 to 9,
**characterized in that** the loading/charging unit (9) is configured to electrically recharge the power supply module (29) when the loading/charging unit (9) is electrically connected to the processing unit (8).

11. Measuring rake designed to be fixed to a connecting rod disposed across a duct of an aircraft engine,
**characterized in that** it comprises an electronic device (1) according to any of Claims 1 to 10.

12. Aircraft engine, said engine (3) comprising a duct (5) and at least one movable reversing door (38), said reversing door (38) comprising at least one connecting rod (4) fixed in an articulated manner between the reversing door (38) and a powerplant (34), said connecting rod (4) being configured to allow the reversing door (38) to be brought into a retracted position, in which it is not across the duct (5), and into a deployed position, in which it is across the duct (5),
**characterized in that** it comprises at least one measuring rake (2) according to Claim 11, arranged on at least one connecting rod (4) of the engine (3), the one or more connecting rods (4) each being housed in the housing of at least one sleeve (82) of a measuring rake (2).

13. Aircraft,
**characterized in that** it comprises at least one engine according to Claim 12.
